# EUROPÄISCHE PATENTSCHRIFT

(11) **EP 2 649 691 B1**
(45) Veröffentlichungstag und Bekanntmachung des Hinweises auf die Patenterteilung: **11.03.2015**
(21) Anmeldenummer: 11805764.5
(22) Anmeldetag: 07.12.2011
(51) Int. Cl.: H02G 13/00

(54) **Rotorblatt mit einer Durchführung für Blitzschutzkabel**
Rotor blade with a bushing for a lightning protection cable
Pale de rotor avec passage pour câble de protection contre la foudre

(30) Priorität: 10.12.2010 DE 102010062819
(43) Veröffentlichungstag der Anmeldung: 16.10.2013
(73) Patentinhaber: Senvion SE, 22297 Hamburg (DE)
(72) Erfinder: FLACH, Christian, 24790 Schacht Audorf (DE); ZELLER, Lenz, Simon, 24114 Kiel (DE); BECKER, Claas, 25482 Appen (DE); KROGMANN, Timm, 17255 Priepert (DE); BARTSCH, Tobias, 24768 Rendsburg (DE)
(74) Vertreter: Volmer, Jochen
(86) Internationale Anmeldenummer: PCT/EP2011/006147
(87) Internationale Veröffentlichungsnummer: WO 2012/076168

(56) Entgegenhaltungen:
- EP-A1- 2 003 757
- EP-A1- 2 234 235
- EP-A2- 1 568 883
- DE-A1-102004 022 299

## Beschreibung

Die Erfindung betrifft ein Rotorblatt einer Windenergieanlage mit einer Durchführung für Blitzschutzkabel durch einen Steg eines Rotorblatts einer Windenergieanlage zur elektrisch leitenden Verbindung eines mit einem Blitzrezeptor verbundenen Rezeptorkabels auf einer Seite des Stegs mit wenigstens einem auf der gegenüberliegenden Seite des Stegs angeordneten Blitzschutzkabel, umfassend einen den Steg durchdringenden elektrisch leitenden Verbindungskörper. Die Erfindung betrifft ferner eine Windenergieanlage.

Moderne Rotorblätter von Windenergieanlagen, die in Halbschalenbauweise aus Laminaten aus faserverstärkten Kunststoffen hergestellt sind, weisen in der Regel an der Blattspitze sowie an einigen Punkten entlang der Hinterkante des Blattprofils Blitzrezeptoren auf, die zu einem Blitzschutzsystem der Windenergieanlage gehören. Die Blitzrezeptoren sind über ein Blitzschutzkabel, das in Längsrichtung des Rotorblatts verläuft, miteinander und mit einem Blitzableitungssystem in der Gondel und im Turm der Windenergieanlage verbunden. In Halbschalenbauweise gefertigte Rotorblätter weisen einen oder zwei in Längsrichtung des Rotorblatts verlaufende Stege auf, die die obere Halbschale mit der unteren Halbschale verbinden und Zug- und Scherkräfte zwischen den Halbschalen aufnehmen. Die Stege werden in Formen gefertigt, wobei üblicherweise die Blitzschutzkabel, die in oder nahe einer Nullsehne des Rotorblatts verlaufen, in einigen Fällen bei der Herstellung des Steges in den Steg einlaminiert werden, beispielsweise mittels einer Laminatschicht, mit der das Blitzschutzkabel bedeckt wird.

Aus fertigungstechnischen Gründen verläuft das Blitzschutzkabel in einigen Fällen auf der der Vorderkante des Profils zugewandten Seite des Stegs. Für die entlang der Hinterkante des Profils verteilten Blitzrezeptoren muss das entsprechende Rezeptorkabel, das ebenfalls ein Blitzschutzkabel im Sinne der vorliegenden Erfindung ist, somit durch den Steg durchgeführt werden, damit der jeweilige Blitzrezeptor an der Hinterkante des Profils mit dem auf der Vorderseite des Steges verlaufenden Blitzschutzkabel verbunden wird, das in Längsrichtung des Rotorblatts verläuft.

In einem herkömmlichen, von der Anmelderin verwendeten Verfahren wird an einer Durchführungsstelle ein Kunststoffbauteil in den Steg eingesetzt, der in einer Schichtstruktur aus einer zentralen Schaumstoffstruktur mit außenliegenden faserverstärkten Laminatlagen gefertigt ist. An der Stelle des Kunststoffbauteils wird eine Durchbohrung erzeugt, durch die ein Metallbolzen mit einem Kopfteil und einem Gewindeteil gesteckt wird. Auf beiden Seiten des Steges wird jeweils eine Unterlegscheibe auf die Bohrung aufgesetzt, die die Kraft beim Anziehen einer Mutter auf dem Gewindeteil auf die darunter liegenden Laminatlagen großflächig verteilt. Das Rezeptorkabel wird mit der Unterlegscheibe auf der Hinterseite des Steges verschweißt, um eine gute elektrische Verbindung herzustellen. Auf der Vorderseite des Stegs werden Kabelschuhe mit Löchern verwendet, durch die der Bolzen hindurchgesteckt wird, und mit dem mehrere Abschnitte des Blitzschutzkabels, das längs im Rotorblatt verläuft, miteinander elektrisch verbunden werden. Nach dem Anschrauben der Mutter und dem Festziehen der elektrischen Verbindungen mittels des Bolzens und der Mutter wird beidseitig jeweils eine weitere Laminatlage über die Durchführung gelegt.

EP 1 568 883 A2 und DE 10 2004 022 299 A1 betreffen eine Blitzschutzeinrichtung für Windenergieanlagen, wobei ein Blitzpfad von den Rotorblättern und die Nabe über die Gondel zum Turm führt und mindestens einen Blitzüberträger zur Überleitung zwischen zwei relativ zueinander beweglichen Komponenten der Windenergieanlage aufweist. Es ist vorgesehen, an einer Seite des Blitzüberträgers eine Abrollbahn und an der anderen Seite eine darauf ablaufende Kontaktrolle vorzusehen. Die Kontaktrolle kann mit einem Schleifkörper elektrisch leitend verbunden sein, der in elektrisch leitender Berührung mit einer Erdungsbürste steht. Es ist außerdem ein Tragbolzen offenbart, der durch zwei Halterplatten führt und Teil des Blitzpfades ist.

EP 2 003 757 A1 betrifft eine Erdleiterdurchführung mit einem in einer Wand einzufügenden Isolierteil mit einem Durchgang und einem metallischen Erdleiter, der nach dem Einfügen in die Wand durchführbar ist, um die metallische Verbindung der Erdleiterdurchführung herzustellen.

Von diesem Stand der Technik ausgehend liegt der vorliegenden Erfindung die Aufgabe zugrunde, eine einfach herzustellende Durchführung für Blitzschutzkabel durch einen Steg eines Rotorblatts einer Windenergieanlage zur Verfügung zu stellen, wobei insbesondere die Anzahl von Verbindungspunkten reduziert werden soll.

Diese Aufgabe wird durch ein Rotorblatt einer Windenergieanlage mit einer Durchführung für Blitzschutzkabel durch einen Steg des Rotorblatts zur elektrisch leitenden Verbindung eines mit einem Blitzrezeptor verbundenen Rezeptorkabels auf einer Seite des Stegs mit wenigstens einem auf der gegenüberliegenden Seite des Stegs angeordneten Blitzschutzkabel gelöst, umfassend einen den Steg durchdringenden elektrisch leitenden Verbindungskörper, die dadurch weitergebildet ist, dass der Verbindungskörper mit dem wenigstens einen Blitzschutzkabel mittels einer Verschraubung und/oder Verklemmung elektrisch leitend verbunden ist und mit dem Rezeptorkabel mittels einer Verschraubung elektrisch leitend verbunden ist, wobei der elektrisch leitende Verbindungskörper als metallischer Verbindungsbolzen ausgebildet ist, der den Steg durchdringt, wobei der Verbindungsbolzen an einem Ende einen Haken zum Halten und teilweise Umschließen eines Blitzschutzkabels und am anderen Ende ein Gewinde aufweist, auf das eine Mutter aufgeschraubt oder aufschraubbar ist.

Durch die beidseitige Verschraubung bzw. Verklemmung entfällt die Notwendigkeit, dass das Rezeptorkabel mit einer Unterlegscheibe verschweißt werden muss, was die Herstellung der Durchführung deutlich einfacher macht. Dennoch ist eine entsprechende erfindungsgemäße Durchführung konform der Richtlinie IEC 61400-24 für den Blitzschutz an Windenergieanlagen.

Eine solche Durchführung kann auch in einem anschließenden Herstellungsschritt einseitig oder beidseitig überlaminiert werden oder überlaminiert sein.

In einer vorteilhaften Weiterbildung ist der elektrisch leitende Verbindungskörper in den Steg eingelassen, insbesondere einlaminiert, wobei der Verbindungskörper zu jeder Seite des Stegs hin jeweils wenigstens eine Bohrung mit Innengewinde zum Einschrauben einer Schraube für eine Schraubbefestigung eines Blitzschutzkabels oder Rezeptorkabels aufweist.

In dem Fall, dass eine Serie von Blitzschutzkabeln auf der Vorderseite genutzt wird, kann auf der Vorderseite des Stegs auch vorgesehen sein, dass der Verbindungskörper mehrere Bohrungen mit Innengewinde zum Einschrauben einer Schraube für eine Schraubbefestigung eines Blitzschutzkabels aufweist. Der elektrisch leitende Verbindungskörper stellt eine sehr großflächige und voluminöse und somit gut leitende Durchführung dar. Die Herstellung kann so vonstattengehen, dass der Verbindungskörper zunächst in die Form eingelegt wird, in der der Steg hergestellt wird, gegebenenfalls auf eine bereits in der Form vorhandene Laminatlage, wobei der Verbindungskörper beidseitig in Längsrichtung des Rotorblattes dann mit einem Füllmaterial, beispielsweise Schaumstoff, Balsaholz oder dergleichen kontaktiert wird und abschließend die vorderseitigen Laminatlagen aufgelegt werden. Der Verbindungskörper kann die Bohrungen bereits aufweisen, oder nach Herstellung des Steges können die Bohrungen und die Innengewinde im Verbindungskörper hergestellt werden.

Erfindungsgemäß ist vorgesehen, dass der elektrisch leitende Verbindungskörper als metallischer Verbindungsbolzen ausgebildet ist, der den Steg durchdringt, wobei der Verbindungsbolzen an einem Ende einen Haken zum Halten und teilweise Umschließen eines Blitzschutzkabels und am anderen Ende ein Gewinde aufweist, auf das eine Mutter aufgeschraubt oder aufschraubbar ist.

Dies hat den Vorteil, dass der Haken, der vorzugsweise auf der Vorderseite des Stegs angeordnet ist, ausgebildet ist, ein durchgängiges Blitzschutzkabel, das vorzugsweise die gesamte Länge des Rotorblatts durchläuft, zu erfassen und einzuklemmen, welches an der Stelle der Durchführung bzw. des Hakens vorzugsweise abisoliert ist. Auf diese Weise wird die Anzahl der Verbindungsstellen des durchlaufenden Blitzschutzkabels stark reduziert gegenüber einer herkömmlichen Version, bei der ein Blitzschutzkabel jeweils zwischen zwei Durchführungen vorgesehen ist und mit dem nächsten Blitzschutzkabel lediglich über den Kontakt mit einem Kabelschuh elektrisch leitend verbunden ist. Mit dieser Schraub- und Klemmverbindung wird der Blitzschutz weiter verbessert.

Das entgegengesetzte Ende des Bolzens, das an der Hinterseite des Steges herausragt, weist ein Gewinde auf, auf das eine Mutter aufschraubbar ist. An dieser Stelle lässt sich auf einfache Weise eine Schraubverbindung mit einem Kabelschuh und gegebenenfalls einer Unterlegscheibe herstellen, durch die der Bolzen hindurch gesteckt ist, wobei der Kabelschuh auf ein Rezeptorkabel montiert ist, das mit einem Blitzrezeptor an der Hinterkante des Rotorblatts verbunden ist.

Der Begriff "Schraubverbindung" wird im Rahmen der Erfindung so verstanden, dass auch das Erfassen eines abisolierten Blitzschutzkabels durch den Haken umfasst ist, da die Verbindung durch das Aufschrauben beispielsweise einer Mutter auf das Gewinde des Bolzens auf der gegenüberliegenden Seite des Stegs entsteht.

Vorzugsweise ist ein Blitzschutzkabel an einer Stelle abisoliert, an der es von dem Haken gehalten wird.

Um das Laminat des Steges nicht zu verletzen und einen weichen Füllstoff des Steges nicht zu quetschen, ist vorzugsweise vorgesehen, dass ein, insbesondere elektrisch nichtleitender, Stützkörper im Steg vorgesehen ist, der eine Durchführungsöffnung für den Verbindungsbolzen aufweist, wobei der Stützkörper einen Stützstoff aufweist, insbesondere Holz, Balsaholz, PVC oder PET.

Der Stützstoff weist eine Steifigkeit und Druckwiderstandsfähigkeit auf, die diejenige des normalen Füllstoffs des Steges übersteigt. Dieser Stützkörper nimmt somit die Druckkräfte auf, die durch das Verspannen des Bolzens bei der Herstellung der elektrischen Durchführung auftreten.

Der Stützkörper ist vorzugsweise in den Steg einlaminiert. Die Durchführungsöffnung kann nach der Herstellung des Steges erzeugt werden. Die Herstellung des Steges verläuft in der im Zusammenhang mit einem elektrisch leitenden Verbindungskörper, der in den Steg eingelassen ist, genannten Weise.

Um eine gute elektrisch leitende Verbindung und Durchführung zu erhalten und das Laminat vor Verletzungen zu schützen, ist vorzugsweise vorgesehen, dass wenigstens eine elektrisch leitende metallische Unterlegscheibe für eine Schraubverbindung eines Blitzschutzkabels und/oder eines Rezeptorkabels vorgesehen ist, die zwischen einer Außenfläche des Stegs einerseits und dem Blitzschutzkabel oder dem Rezeptorkabel andererseits angeordnet ist.

Vorzugsweise weist wenigstens ein Blitzschutzkabel und/oder wenigstens ein Rezeptorkabel einen Kabelschuh mit einer Öffnung zum Durchführen einer Schraube oder eines Bolzens für eine Schraubverbindung auf.

In einer vorteilhaften Weiterentwicklung der erfindungsgemäßen Durchführung ist ein C-Profil vorgesehen ist, das in einem zentralen Bereich mit einer Schraubverbindung an einem elektrisch leitenden Verbindungskörper in einem Steg befestigt ist, mittels dessen Rezeptor-Aufnahmeklötze gegen Blattschalen eines Rotorblatts gedrückt werden.

Die Länge der Halbschalen, die mehrere Dutzend Meter betragen kann, bedingt, dass es Fertigungstoleranzen gibt, wodurch eine genaue Positionierung für die Blitzrezeptoren an der Hinterkante nicht ohne Weiteres möglich ist. Bei der Herstellung des Rotorblatts aus zwei Halbschalen wird der Steg daher zunächst in eine der beiden Halbschalen eingesetzt und die C-Profile an den Durchführungen angebracht. An den Enden der Arme des C-Profils befinden sich massive metallische Rezeptor-Aufnahmeklötze, die später die Basis für Blitzrezeptoren darstellen. Die Anordnung auf dem C-Profil bewirkt, dass beim Zusammensetzen der beiden Halbschalen die Rezeptorklötze an der oberen Halbschale und an der unteren Halbschale im Bereich der Hinterkante des Profils vorgespannt sind und mit einer Vorspannung gegen die obere bzw. untere Halbschale gedrückt werden. Die Rezeptorklötze sind außerdem mit einem Verbindungsmittel, beispielsweise einem Harz, auf ihrer Oberfläche versehen, so dass sie beim Zusammensetzen der Halbschalen auch eine Klebverbindung mit den Halbschalen dort eingehen, wo sie die Halbschalen kontaktieren. Nach der Herstellung des Rotorblatts und der Verfugung der Halbschalen miteinander wird mit einem Metalldetektor die Position der Rezeptor-Aufnahmeklötze ermittelt. An der Stelle der Rezeptor-Aufnahmeklötze wird ein Loch in die Halbschalen gebohrt und ein Sackloch mit Innengewinde im Rezeptor-Aufnahmeklotz erzeugt, in das dann ein Blitzrezeptor eingeschraubt wird.

Das C-Profil kann selber elektrisch leitend sein oder elektrisch nicht leitend. Im letztgenannten Fall ist ein Rezeptorkabel als Blitzschutzkabel vorgesehen, das den Rezeptor bzw. den Rezeptor-Aufnahmeklotz mit der entsprechenden Durchführung durch den Steg verbindet.

Die der Erfindung zugrunde liegende Aufgabe wird weiter durch eine Windenergieanlage mit einem entsprechenden erfindungsgemäßen Rotorblatt gelöst. Diese weist die gleichen Vorteile und Eigenschaften bezüglich des Blitzschutzes auf, wie das erfindungsgemäße Rotorblatt mit der zuvor beschriebenen erfindungsgemäßen Durchführung.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Schnittdarstellung durch eine bekannte Durchführung,
- Fig. 2: eine schematische Schnittdarstellung durch eine Durchführung,
- Fig. 3: eine schematische Schnittdarstellung durch eine Ausführungsform einer erfindungsgemäßen Durchführung und
- Fig. 4: eine schematische Schnittdarstellung durch eine weitere Ausführungsform einer erfindungsgemäßen Durchführung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

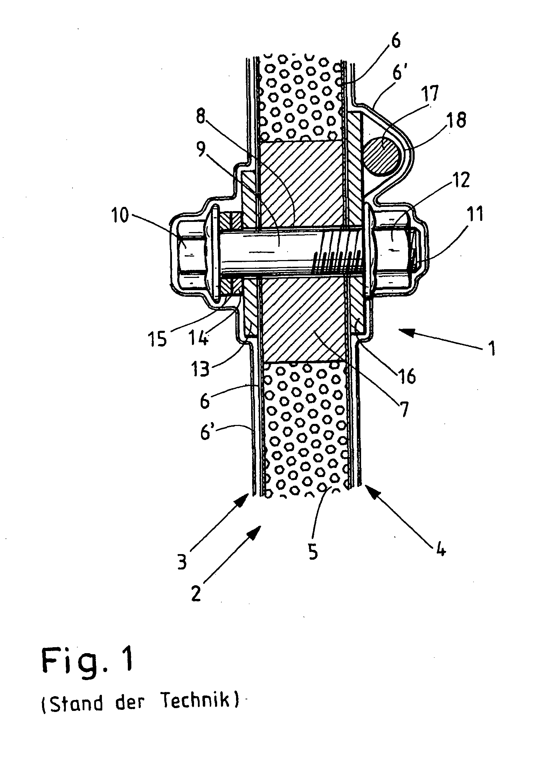

In Fig. 1 ist eine schematische Schnittdarstellung durch eine bekannte Durchführung für Blitzschutzkabel durch einen Steg eines Rotorblatts einer Windenergieanlage nach dem Stand der Technik gezeigt.

Die Durchführung 1 ist in einen Steg 2 eingelassen, der eine symmetrische Schichtstruktur aus zwei außenliegenden Laminatlagen an einer Vorderseite 3 und einer Hinterseite 4 und dazwischen ein weiches Füllmaterial 5 aufweist. Die Vorderseite 3 ist diejenige, die zur Vorderkante des nicht dargestellten Rotorblattprofils weist, während die Hinterseite 4 auf der Seite der Hinterkante des Blattprofils angeordnet ist. Das Laminat 6 umfasst einen faserverstärkten Kunststoff. Diese Lage dient hauptsächlich dazu, Scher- und Zugkräfte zwischen der oberen Blattschalenhälfte und der unteren Blattschalenhälfte aufzunehmen. Das Füllmaterial 5 besteht aus einem weicheren Material, beispielsweise einem polymeren Schaumstoff. Im Rahmen der Erfindung ist es unerheblich, ob das Rotorblattprofil aus zwei Blattschalenhälften oder noch mehr Schalenteilen aufgebaut ist.

An der Stelle einer elektrischen Durchführung 1 für Blitzschutzkabel ist ein Stützkörper 7 in den Steg 2 einlaminiert anstelle des Füllmaterials 5. Der Stützkörper 7 besteht aus einem Material, das eine höhere Härte aufweist als das Füllmaterial 5. Leichte, aber dennoch harte Stützkörper können beispielsweise aus Holz, Balsaholz, PVC oder PET aufgebaut sein. Der Stützkörper 7 weist eine durchgehende Bohrung 8 auf, durch die ein Bolzen 9 gesteckt ist. Der Bolzen weist auf der Vorderseite 3 des Steges 2 einen Bolzenkopf 10 mit einem Sechskantprofil auf. Zur Hinterseite 4 hin weist der Bolzen 9 ein Bolzengewinde 11, das als Außengewinde ausgebildet ist, auf. Auf dieses Bolzengewinde 11 ist eine Mutter 12 aufgeschraubt.

Beidseitig des Steges 2 ist jeweils eine metallische und elektrisch leitende Unterlegscheibe 13 bzw. 16 angeordnet, die den Druck, der durch die Verschraubung des Bolzens 11 auf den Steg 2 und die Laminatlage 6 ausgeübt wird, über eine größere Fläche verteilt und somit Schäden am Laminat 6 verhindert. Außerdem wird mittels der Unterlegscheiben 13, 16 eine elektrische Verbindung verbessert.

Auf der Vorderseite 3 des Steges 2 verläuft ein nicht dargestelltes Blitzschutzkabel in mehreren Sektionen in Längsrichtung des Rotorblatts. In Fig. 1 ist von den beiden Sektionen des Blitzschutzkabels jeweils ein Querschnitt durch den flachen Teil eines Kabelschuhs 14, 15 dargestellt. Die beiden Kabelschuhe 14, 15 sind auf dem Bolzen übereinander gelegt und somit miteinander elektrisch kontaktiert. Sie werden durch den verbreiterten Bolzenkopf 10 zusammengepresst und auf die Unterlegscheibe 13 gepresst.

Auf der gegenüberliegenden Hinterseite 4 befindet sich an der Stelle des Bolzens 9 die Unterlegscheibe 16. Diese ist zu einer Seite hin verbreitert. In dem verbreiterten Bereich der Unterlegscheibe 16 ist ein Rezeptorkabel 17, das ebenfalls ein Blitzschutzkabel ist, mit einer Schweißnaht 18 auf die Unterlegscheibe 16 aufgeschweißt. Auf diese Weise ergibt sich eine gute elektrisch leitfähige Verbindung.

Auf beiden Seiten des Steges 2 ist die Durchführung mittels einer weiteren Laminatlage 6' jeweils abgedeckt und eingekapselt.

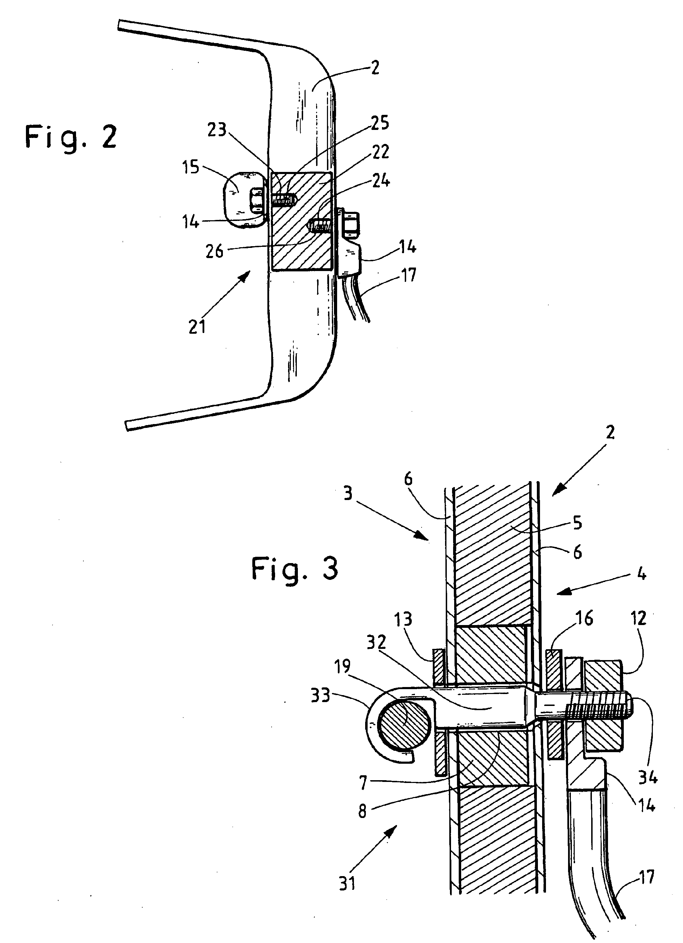

In Fig. 2 ist in einer schematischen Schnittdarstellung eine Durchführung 21 dargestellt. Dabei handelt es sich um einen metallisch leitenden Verbindungskörper 22, der an die Stelle des Füllstoffes 5 aus Fig. 1 in den Steg 2 eingelegt ist. Dieser weist auf beiden Seiten, d.h. der Vorderseite 3 und der Hinterseite 4, jeweils wenigstens ein Sackloch 23, 24 mit einem Innengewinde auf, in das jeweils eine Schraube 25, 26 eingeschraubt ist. Auf der Vorderseite ist mittels der Schraube 25 im Sackloch 23 ein Kabelschuh 15 einer Sektion eines Blitzschutzkabels eingeklemmt bzw. verschraubt, das ein Rotorblatt längs durchläuft. Dabei wird frontal auf die Vorderseite des Kabelschuhs 15 geblickt.

Auf der Hinterseite ist ebenfalls ein Kabelschuh 14, der von der Seite dargestellt ist, mittels der Schraube 26 an der Durchführung 21 bzw. am Verbindungskörper 22 angeschraubt, wobei der Kabelschuh 14 mit einem Rezeptorkabel 17 verbunden ist, der zu einem nicht dargestellten Rezeptorklotz führt.

In Fig. 2 ist die Form eines Stegs 2 im Querschnitt gut erkennbar. Ein entsprechender Steg 2 wird mit zwei unter einem Winkel auseinanderlaufenden Seitenflächen in einer Form hergestellt, wobei die Seitenflächen dazu dienen, mit der oberen Halbschale bzw. der unteren Halbschale des Rotorblatts verfügt zu werden. Da aus fertigungstechnischen Gründen die Form nach oben hin offen ist, damit der Steg 2 nach dem Herstellen aus der Form gelöst werden kann, ist das Blitzschutzkabel 19, das in Längsrichtung verläuft, bei einem Steg 2, wie er in Fig. 2 dargestellt ist, auf der Vorderseite des Stegs 2 angeordnet.

In Fig. 3 ist eine Ausführungsform einer erfindungsgemäßen Durchführung 31 im Schnitt schematisch dargestellt. Der Steg 2 ist so ausgeführt, wie in Fig. 1 beschrieben. In dem Fall, dass das Füllmaterial 5 einer Druckbelastung durch Verschraubung nicht standhält, ist ein Stützkörper 7 aus einem widerstandsfähigen Material, beispielsweise Balsaholz, PVC oder PET an dieser Stelle eingefügt. Es ist eine durchgehende Bohrung 8 durch den Steg vorgesehen, durch den ein Bolzen 32 durchgeführt ist. Falls bereits das Füllmaterial 5 fest genug ist, beispielsweise Balsaholz, entfällt der Stützkörper 7, und die Bohrung 8 wird direkt durch das Füllmaterial 5 gehend erzeugt.

Der Bolzen 32 weist an der Vorderseite 3 einen Haken 33 auf, der in seiner Form im Querschnitt im Wesentlichen einem halben Hohlzylinder entspricht. Mit diesem Haken 33 wird ein durchgehendes Blitzschutzkabel 19, das an dieser Stelle abisoliert ist, erfasst und gegen eine metallische Unterlegscheibe 13 gedrückt bzw. geklemmt. Die Verschraubung erfolgt durch eine Mutter, die auf der gegenüberliegenden Seite, d.h. der Hinterseite 4 des Steges, auf ein Bolzengewinde 34 des Bolzens 32 aufgeschraubt wird. Auf dieser Hinterseite 4 befinden sich außerdem auch eine Unterlegscheibe 16 sowie ein Kabelschuh 14, durch die der Bolzen 32 hindurch gesteckt ist. Der Kabelschuh 14 ist mit einem Rezeptorkabel 17 verbunden.

Diese in Fig. 3 gezeigte Ausführungsform einer Durchführung 31 ist einfach herstellbar. Bei der Herstellung des Steges 2 kann das Blitzschutzkabel 19 großflächig mit einlaminiert werden, vorzugsweise an oder in der Nähe der Nullsehne des Rotorblatts. An der Stelle der Durchführung kann anschließend die das Blitzschutzkabel 19 bedeckende Laminatschicht abgetragen werden. Wenn dies über eine Länge des Blitzschutzkabels 19 von mehreren Zentimetern, beispielsweise 10 - 20 Zentimetern, geschieht, wird das Blitzschutzkabel soweit zur Seite gedrückt, dass es mittels des Hakens 33 des Bolzens 32 erfasst werden kann, der von der anderen Seite her durch die Bohrung 8 hindurch gesteckt wird. Alternativ kann die entsprechende Stelle bei dem Überlaminieren ausgespart werden.

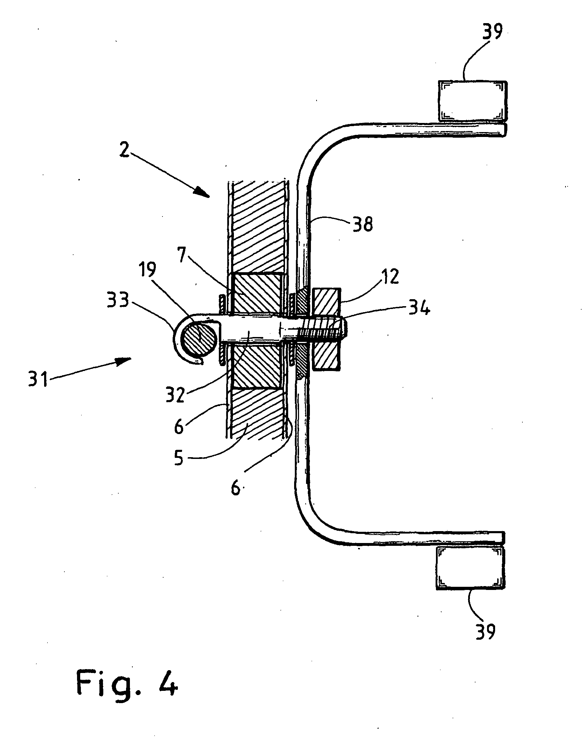

In Fig. 4 ist eine Weiterbildung der Durchführung 31 gemäß Fig. 3 im Schnitt schematisch dargestellt. Die Durchführung 31 entspricht in der Ausführung des Bolzens 32 mit Haken 33 und in der Ausführung des Stegs 2 vollständig derjenigen aus Fig. 3. Auf der Hinterseite des Steges, die in Fig. 4 ebenfalls rechts dargestellt ist, ist anstelle eines Kabelschuhs 14 allerdings ein C-Profil 38 angeordnet, das im vorliegenden Ausführungsbeispiel elektrisch leitend ist und somit die Aufgabe eines Rezeptorkabels übernimmt. An den Enden der beiden Arme des C-Profils 38 befindet sich jeweils ein Rezeptorklotz 39, der mit einer nicht dargestellten Schicht von Klebmitteln, beispielsweise Harz, verbunden ist und bei der Herstellung des Rotorblatts beim Aufeinandersetzen der Blattschalenhälften gegen die Innenseite dieser Blattschalenhälften gedrückt wird.

Das C-Profil 38 ist auf dem Bolzen 32 mittels einer Schraube 12 fixiert. In dem Fall, dass es sich bei dem C-Profil 38 um einen nicht leitenden Körper handelt, ist an dieser Stelle ein separates Rezeptorkabel vorgesehen, das die Rezeptorklötze 39 mit dem Bolzen 32 und somit der Durchführung 31 elektrisch leitend verbindet und ebenfalls, beispielsweise wie in Fig. 3 dargestellt, mittels eines Kabelschuhs auf dem Bolzen 32 verschraubt ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichentiste

- 1: Durchführung
- 2: Steg
- 3: Vorderseite
- 4: Hinterseite
- 5: Füllmaterial
- 6, 6': Laminat
- 7: Stützkörper
- 8: Bohrung
- 9: Bolzen
- 10: Bolzenkopf
- 11: Bolzengewinde
- 12: Mutter
- 13: Unterlegscheibe
- 14, 15: Kabelschuh
- 16: Unterlegscheibe
- 17: Rezeptorkabel
- 18: Schweißnaht
- 19: durchgehendes Blitzschutzkabel
- 21: Durchführung
- 22: Verbindungskörper
- 23, 24: Sackloch mit Innengewinde
- 25, 26: Schraube
- 31: Durchführung
- 32: Bolzen
- 33: Haken
- 34: Bolzengewinde
- 38: C-Profil
- 39: Rezeptorklotz

## Patentansprüche

1. Rotorblatt einer Windenergieanlage mit einer Durchführung (21, 31) für Blitzschutzkabel (17, 19) durch einen Steg (2) des Rotorblatts zur elektrisch leitenden Verbindung eines mit einem Blitzrezeptor (39) verbundenen Rezeptorkabels (17) auf einer Seite (4) des Stegs (2) mit wenigstens einem auf der gegenüberliegenden Seite (3) des Stegs (2) angeordneten Blitzschutzkabel (19), umfassend einen den Steg (2) durchdringenden elektrisch leitenden Verbindungskörper (22, 32), **dadurch gekennzeichnet, dass** der Verbindungskörper (22, 32) mit dem wenigstens einen Blitzschutzkabel (19) mittels einer Verschraubung und/oder Verklemmung elektrisch leitend verbunden ist und mit dem Rezeptorkabel (17) mittels einer Verschraubung elektrisch leitend verbunden ist, wobei der elektrisch leitende Verbindungskörper (32) als metallischer Verbindungsbolzen (32) ausgebildet ist, der den Steg (2) durchdringt, wobei der Verbindungsbolzen (32) an einem Ende einen Haken (33) zum Halten und teilweise Umschließen eines Blitzschutzkabels (19) und am anderen Ende ein Gewinde (34) aufweist, auf das eine Mutter (12) aufgeschraubt oder aufschraubbar ist.

2. Rotorblatt nach Anspruch 1, **dadurch gekennzeichnet, dass** der elektrisch leitende Verbindungskörper (22) in den Steg (2) eingelassen, insbesondere einlaminiert, ist, wobei der Verbindungskörper (22) zu jeder Seite (3, 4) des Stegs (2) hin jeweils wenigstens eine Bohrung (23, 24) mit Innengewinde zum Einschrauben einer Schraube (25, 26) für eine Schraubbefestigung eines Blitzschutzkabels (19) oder Rezeptorkabels (17) aufweist.

3. Rotorblatt nach Anspruch 1 oder 2, **dadurch gekennzeichnet, dass** ein Blitzschutzkabel (19) an einer Stelle abisoliert ist, an der es von dem Haken (33) gehalten wird.

4. Rotorblatt nach einem der Ansprüche 1 bis 3, **dadurch gekennzeichnet, dass** ein, insbesondere elektrisch nichtleitender, Stützkörper (7) im Steg (2) vorgesehen ist, der eine Durchführungsöffnung (8) für den Verbindungsbolzen (32) aufweist, wobei der Stützkörper (7) einen Stützstoff aufweist, insbesondere Holz, Balsaholz, PVC oder PET.

5. Rotorblatt nach Anspruch 4, **dadurch gekennzeichnet, dass** der Stützkörper (7) in den Steg (2) einlaminiert ist.

6. Rotorblatt nach einem der Ansprüche 1 bis 5, **dadurch gekennzeichnet, dass** wenigstens eine elektrisch leitende metallische Unterlegscheibe (13, 16) für eine Schraubverbindung eines Blitzschutzkabels (19) und/oder eines Rezeptorkabels (17) vorgesehen ist, die zwischen einer Außenfläche des Stegs (2) einerseits und dem Blitzschutzkabel (19) oder dem Rezeptorkabel (17) andererseits angeordnet ist.

7. Rotorblatt nach einem der Ansprüche 1 bis 6, **dadurch gekennzeichnet, dass** wenigstens ein Blitzschutzkabel (19) und/oder wenigstens ein Rezeptorkabel (17) einen Kabelschuh (14, 15) mit einer Öffnung zum Durchführen einer Schraube (25, 26) oder eines Bolzens (32) für eine Schraubverbindung aufweist.

8. Rotorblatt nach einem der Ansprüche 1 bis 7, **dadurch gekennzeichnet, dass** ein C-Profil (38) vorgesehen ist, das in einem zentralen Bereich mit einer Schraubverbindung an einem elektrisch leitenden Verbindungskörper (22, 32) in einem Steg (2) befestigt ist, mittels dessen Rezeptor-Aufnahmeklötze (39) gegen Blattschalen eines Rotorblatts gedrückt werden.

9. Windenergieanlage mit einem Rotorblatt nach einem der Ansprüche 1 bis 8.

## Claims

1. A rotor blade for a wind turbine with a lead-through (21, 31) for lightning protection cables (17, 19) through a web (2) of the rotor blade for electrically conductively connecting a receptor cable (17) connected to a lightning receptor (39) on one side (4) of the web (2) with at least one lightning protection cable (19) arranged on the opposite side (3) of the web (2), including an electrically conductive connection body (22, 32) passing through the web (2), **characterised in that** the connection body (22, 32) is electrically conductively connected to the at least one lightning protection cable by means of a screw connection and/or a clamping connection and is electrically conductively connected to the receptor cable (17) by means of a screw connection, wherein the electrically conductive connection body (32) is constructed in the form of a metallic connecting bolt (32), which passes through the web (2), wherein the connecting bolt (32) has a hook (33) at one end for holding and partially surrounding a lightning protection cable (19) and a screw thread (34) at the other end, onto which a nut (12) is screwed or screwable.

2. A rotor blade as claimed in Claim 1, **characterised in that** the electrically conductive connection body (22) is recessed into the web (2), particularly laminated into it, wherein the connection body (22) has at least one bore (23, 24) on each side (3, 4) of the web (2) with an internal screw thread for screwing in a screw (25, 26) for a screw connection of a lightning protection cable (19) or a receptor cable (17).

3. A rotor blade as claimed in Claim 1 or 2, **characterised in that** a lightning protection cable (19) is bared at a position at which it is held by the hook (33).

4. A rotor blade as claimed in one of Claims 1 to 3, **characterised in that** a, particularly electrically non-conductive, support body (7) is provided in the web (2), which provides an opening (8) for the connecting bolt (32), wherein the support body (7) includes a support material, particularly wood, balsa wood, PVC or PET.

5. A rotor blade as claimed in Claim 4, **characterised in that** the support body (7) is laminated into the web (2).

6. A rotor blade as claimed in one of Claims 1 to 5, **characterised in that** at least one electrically conductive, metallic washer (13, 16) is provided for a screw connection of a lightning protection cable (19) and/or a receptor cable (17), which is arranged between an outer surface of the web (2) on the one hand and the lightning protection cable (19) or the receptor cable (17) on the other hand.

7. A rotor blade as claimed in one of Claims 1 to 6, **characterised in that** at least one lightning protection cable (19) and/or at least one receptor cable (17) has a cable lug (14, 15) with an opening for the passage of a screw (25, 26) or a bolt (32) for a screw connection.

8. A rotor blade as claimed in one of Claims 1 to 7, **characterised in that** a C profile (38) is provided, which is fastened in a central region with a screw connection to an electrically conductive connection body (22, 32) in a web (2), by means of which receptor receiving blocks (39) are pressed against blade shells of a rotor blade.

9. A wind turbine with a rotor blade as claimed in one of Claims 1 to 8.

## Revendications

1. Pale de rotor d'une installation éolienne comprenant un passage (21, 31) pour un câble de protection contre la foudre (17, 19) par une bande de cisaillement (2) de la pale de rotor pour connecter de manière à conduire l'électricité un récepteur de foudre (39) relié à un câble de réception (17) sur un côté (4) de la bande de cisaillement (2) avec au moins un câble de protection contre la foudre (19) agencé sur le côté opposé (3) de la bande de cisaillement (2), l'élément de liaison électriquement conducteur (22, 32) pénétrant au travers de ladite bande de cisaillement (2), **caractérisée en ce que** l'élément de liaison (22, 32) est connecté de manière à conduire l'électricité à au moins un câble de protection contre la foudre (19) au moyen d'une vis et / ou au moyen d'un moyen de serrage et est relié de manière à conduire l'électricité avec le câble de réception (17) au moyen d'une vis, l'élément de liaison électriquement conducteur (32) étant sous la forme d'une broche de raccordement métallique (32) et pénétrant au travers de la bande de cisaillement (2), la broche de liaison (32) comportant, à une extrémité, un crochet (33) pour maintenir et entourer partiellement un câble de protection contre la foudre (19) et, à l'autre extrémité, un filetage (34) vissé ou pouvant être vissé sur un écrou (12).

2. Pale de rotor selon la revendication 1, **caractérisée en ce que** l'élément de liaison (22) connecté de manière à conduire l'électricité est en particulier laminé dans la bande de cisaillement (2), l'élément de liaison (22) comprenant de chaque côté (3, 4), en direction de la bande de cisaillement (2), au moins un alésage (23, 24) avec un filetage intérieur pour le vissage d'une vis (25, 26) pour la fixation d'un câble de protection contre la foudre (19) ou d'un câble de réception (17).

3. Pale de rotor selon la revendication 1 ou la revendication 2, **caractérisée en ce qu'**un câble de protection contre la foudre (19) est dénudé à l'endroit où il est maintenu par le crochet (33).

4. Pale de rotor selon l'une quelconque des revendications 1 à 3, **caractérisée en ce qu'**un élément de support (7), en particulier électriquement non-conducteur, est prévu dans la bande de cisaillement (2), ledit élément de support présentant une ouverture pour le passage (8) de la broche de connexion (32), l'élément de support (7) comprenant un matériau de support, en particulier du bois, du balsa, du PVC ou du PET.

5. Pale de rotor selon la revendication 4, **caractérisée en ce que** l'élément de support (7) est laminé dans la bande de cisaillement (2).

6. Pale de rotor selon l'une quelconque des revendications 1 à 5, **caractérisée en ce qu'**au moins une rondelle métallique électriquement conductrice (13, 16) est prévue pour la liaison à vis d'un câble de protection contre la foudre (19) et / ou d'un câble de réception (17), la dite rondelle étant disposée entre une surface extérieure de la bande de cisaillement (2) d'une part et le câble de protection contre la foudre (19) ou le câble de réception (17) d'autre part.

7. Pale de rotor selon l'une quelconque des revendications 1 à 6, **caractérisée en ce qu'**au moins un câble de protection contre la foudre (19) et / ou au moins un câble de réception (17) comprennent une cosse de câble (14, 15) avec une ouverture pour le passage d'une vis (25, 26) ou d'un boulon (32) pour un assemblage par vis.

8. Pale de rotor selon l'une quelconque des revendications 1 à 7, **caractérisée en ce qu'**un profilé en C (38) est prévu, qui, dans une région centrale, est fixé avec un raccord fileté à un élément de liaison électriquement conducteur (22, 32) dans une bande de cisaillement (2) et qui est pressé au moyen de ses blocs d'enregistrement de réception (39) contre la coque de la pale de rotor.

9. Installation éolienne comportant une pale de rotor selon l'une quelconque des revendications 1 à 8.
